# EUROPEAN PATENT APPLICATION

(11) **EP 4 498 579 A1**
(43) Date of publication of application: **29.01.2025**
(21) Application number: 24167680.8
(22) Date of filing: 28.03.2024
(51) Int. Cl.: H02K 5/20, H02K 9/197

(54) **ELECTRIC MOTORS INCLUDING COOLANT SLEEVE ASSEMBIES, COOLANT SLEEVE ASSEMBLIES, AND METHODS THEREFOR**

(30) Priority: 28.07.2023 US 202318361281
(71) Applicant: Allison Transmission, Inc., Indianapolis, IN 46222 (US)
(72) Inventor: ALEXANDER, Addison, Avon, 46123 (US); TYSMAN, John L., Indianapolis, 46222 (US)
(74) Representative: HGF

(57) **Abstract**

Electric motors, coolant sleeve assemblies, and methods of cooling a stator of an electric motor are disclosed. An electric motor may include a stator and a coolant sleeve assembly. The coolant sleeve assembly may include a sleeve and a spring. The sleeve may at least partially surround the stator and the spring may be wound around the sleeve.

## Description

### FIELD OF THE DISCLOSURE

The present disclosure relates, generally, to cooling assemblies for electric motors, and, more specifically, to coolant sleeve assemblies adapted to cool stators of electric motors.

### BACKGROUND

Coolant sleeves may be used to conduct coolant over stators of electric motors to cool the stators in use thereof. In some configurations, coolant sleeves may be machined, cast, or otherwise formed to include cooling channels to conduct coolant. Provision of coolant sleeves with coolant channels formed therein presents drawbacks, such as increased manufacturing cost and complexity, for example. Systems, devices, and/or methods that avoid shortcomings associated with existing coolant sleeves remain an area of interest.

### SUMMARY

The present disclosure may comprise one or more of the following features and combinations thereof.

According to one aspect of the present disclosure, an electric motor may include a stator and a coolant sleeve assembly. The coolant sleeve assembly may include a sleeve that at least partially surrounds the stator and a spring wound around the sleeve. The spring may at least partially define at least one coolant channel wall separate from the sleeve to conduct coolant around the sleeve and thereby cool the stator in use of the electric motor.

In some embodiments, the spring may be a helical spring that at least partially defines at least one helical coolant channel wall around the sleeve. The helical spring may have a rectangular cross-sectional shape. Additionally, in some embodiments, an exterior surface of the sleeve may extend circumferentially around a longitudinal axis, the exterior surface may be devoid of any channels or projections along the longitudinal axis, and the helical spring may contact the exterior surface of the sleeve. One or more coolant leakage paths separate from the at least one helical coolant channel wall may be defined between the exterior surface of the sleeve and the helical spring in use of the electric motor.

In some embodiments, the electric motor may include a main housing defining an interior space in which the coolant sleeve assembly and the stator are at least partially disposed such that the main housing, the coolant sleeve assembly, and the stator extend circumferentially around a longitudinal axis. The electric motor may include a first annular seal arranged between the sleeve and the main housing at one axial end of the sleeve and a second annular seal arranged between the sleeve and the main housing at another axial end of the sleeve opposite the one axial end. Additionally, in some embodiments, the main housing may include a first fluid port arranged at an outer diameter of the main housing and a second fluid port arranged at the outer diameter of the main housing such that the first and second fluid ports are spaced from one another along the longitudinal axis. One of the first fluid port and the second fluid port may be arranged to conduct coolant to the coolant sleeve assembly in a direction perpendicular to the longitudinal axis in use of the electric motor, and another of the first fluid port and the second fluid port may be arranged to conduct coolant away from the coolant sleeve assembly in a direction perpendicular to the longitudinal axis in use of the electric motor. Further, in some embodiments still, the first and second fluid ports may be spaced from one another circumferentially around the longitudinal axis.

According to another aspect of the present disclosure, a coolant sleeve assembly to cool a stator of an electric motor may include a sleeve sized to receive the stator and a spring wound around the sleeve. The spring may at least partially define at least one coolant channel wall separate from the sleeve to conduct coolant around the sleeve and thereby cool the stator in use of the coolant sleeve assembly.

In some embodiments, the spring may be a helical spring that at least partially defines at least one helical coolant channel wall around the sleeve. An exterior surface of the sleeve may extend circumferentially around a longitudinal axis, the exterior surface may be devoid of any channels or projections along the longitudinal axis, and the helical spring may contact the exterior surface of the sleeve.

In some embodiments, one or more coolant leakage paths separate from the at least one helical coolant channel wall may be defined between an exterior surface of the sleeve and the spring in use of the coolant sleeve assembly. Additionally, in some embodiments, an exterior surface of the sleeve may extend circumferentially around a longitudinal axis, the spring may contact the exterior surface of the sleeve, and the sleeve may be formed to include at least one retention feature to at least partially retain the spring in interaction with the sleeve around the longitudinal axis. Further, in some embodiments still, an exterior surface of the sleeve may extend circumferentially around a longitudinal axis, and the spring may contact the exterior surface of the sleeve such that a radial tension of the spring at least partially retains the spring in interaction with the sleeve around the longitudinal axis.

According to yet another aspect of the present disclosure, a method of cooling a stator of an electric motor may include assembling a coolant sleeve assembly, positioning the stator in a sleeve of the coolant sleeve assembly such the sleeve at least partially surrounds the stator, integrating the coolant sleeve assembly in a main housing of the electric motor such that the coolant sleeve assembly is arranged in an interior space defined by the main housing, supplying coolant to the coolant sleeve assembly via a fluid inlet formed in the main housing, and circulating coolant around the sleeve via at least one helical coolant channel wall at least partially defined by a spring of the coolant sleeve assembly that is separate from the sleeve.

In some embodiments, the method may include expelling heated coolant from the main housing via a fluid outlet forming in the main housing. Expelling heated coolant from the main housing via the fluid outlet may include conducting coolant in a direction perpendicular to a longitudinal axis of the coolant sleeve assembly.

In some embodiments, integrating the coolant sleeve assembly in the main housing may include disposing the coolant sleeve assembly in the interior space such that the main housing, the coolant sleeve assembly, and the stator extend circumferentially around a longitudinal axis. Additionally, in some embodiments, supplying coolant to the coolant sleeve assembly via the fluid inlet may include conducting coolant in a direction perpendicular to a longitudinal axis of the coolant sleeve assembly. Further, in some embodiments still, assembling the coolant sleeve assembly may include selecting the spring having a stiffness which resists substantial deformation of the spring in response to exposure to pressurized coolant and which permits installation of the spring around the sleeve in at least partial contact with the sleeve.

In some embodiments, the method may include arranging a first annular seal between the sleeve and the main housing at one axial end of the sleeve. The method may include arranging a second annular seal between the sleeve and the main housing at another axial end of the sleeve opposite the one axial end.

In some embodiments, assembling the coolant sleeve assembly may include winding the spring around the sleeve such that the spring is in at least partial contact with the sleeve. Assembling the coolant sleeve assembly may include retaining the spring around the sleeve using at least one retention feature of the sleeve.

These and other features of the present disclosure will become more apparent from the following description of the illustrative embodiments.

### BRIEF DESCRIPTION OF THE DRAWINGS

The invention described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.
FIG. 1 is a simplified exploded view of a coolant sleeve assembly adapted for use in an electric motor;
FIG. 2 is a partial perspective view of a main housing of an electric motor that houses the coolant sleeve assembly of FIG. 1;
FIG. 3 is a sectional view of the main housing of FIG. 2 taken about line 3-3;
FIG. 4 is an assembled perspective view of the coolant sleeve assembly of FIG. 1;
FIG. 5 is a simplified flowchart of a method of assembling the coolant sleeve assembly of FIG. 1;
FIG. 6 is a simplified flowchart of a portion of a method of cooling a stator of an electric motor using the coolant sleeve assembly of FIG. 1; and
FIG. 7 is a simplified flowchart of another portion of the method of FIG. 6.

### DETAILED DESCRIPTION

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

In the drawings, some structural or method features, such as those representing devices, modules, instructions blocks and data elements, may be shown in specific arrangements and/or orderings for ease of description. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

In some embodiments, schematic elements used to represent blocks of a method may be manually performed by a user. In other embodiments, implementation of those schematic elements may be automated using any suitable form of machine-readable instruction, such as software or firmware applications, programs, functions, modules, routines, processes, procedures, plug-ins, applets, widgets, code fragments and/or others, for example, and each such instruction may be implemented using any suitable programming language, library, application programming interface (API), and/or other software development tools. For instance, in some embodiments, the schematic elements may be implemented using Java^{™}, C++^{™}, and/or other programming languages. Similarly, schematic elements used to represent data or information may be implemented using any suitable electronic arrangement or structure, such as a register, data store, table, record, array, index, hash, map, tree, list, graph, file (of any file type), folder, directory, database, and/or others, for example.

Further, in the drawings, where connecting elements, such as solid or dashed lines or arrows, are used to illustrate a connection, relationship, or association between or among two or more other schematic elements, the absence of any such connection elements is not meant to imply that no connection, relationship, or association can exist. In other words, some connections, relationships, or associations between elements may not be shown in the drawings so as not to obscure the disclosure. In addition, for ease of illustration, a single connecting element may be used to represent multiple connections, relationships, or associations between elements. For example, where a connecting element represents a communication of signals, data or instructions, it should be understood by those skilled in the art that such element may represent one or multiple signal paths (e.g., a bus), as may be needed, to effect the communication.

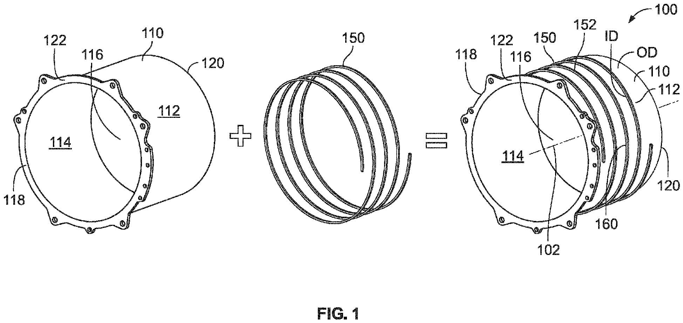

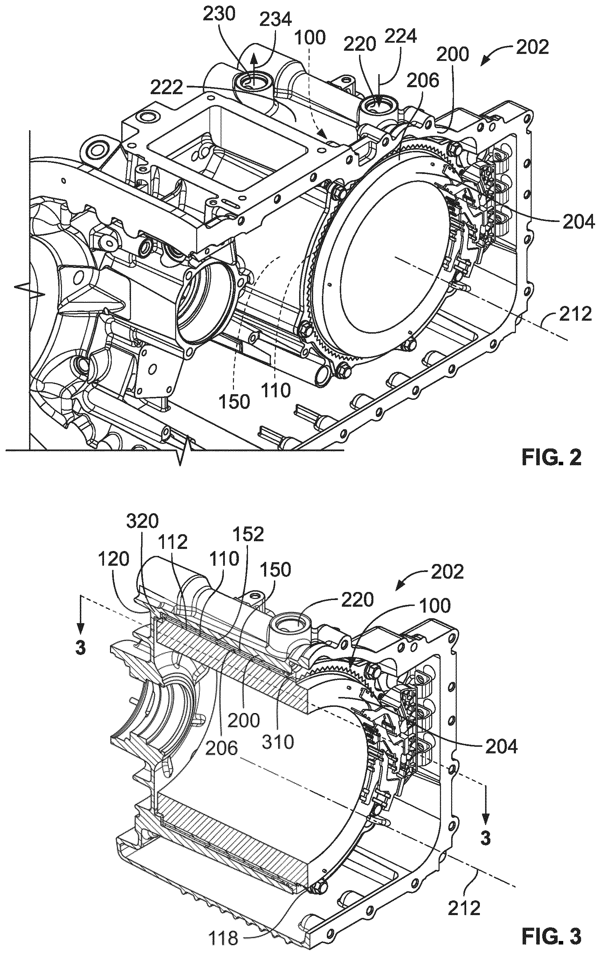

Referring to FIG. 1, an illustrative coolant sleeve assembly 100 is adapted for use with an electric motor (not shown in the Figure). More specifically, as best seen in FIGS. 2 and 3, the coolant sleeve assembly 100 is adapted for integration in a main housing 200 of an electric motor 202. The coolant sleeve assembly 100 is adapted for interaction with a stator 204 of the electric motor 202 as further discussed below. In use of the electric motor 202, the coolant sleeve assembly 100 is configured to dissipate heat produced by the stator 204 using a coolant and thereby cool the stator 204.

In the illustrative embodiment, the coolant sleeve assembly 100 includes a sleeve 110 and a spring 150. The sleeve 110 is sized to receive and at least partially surround the stator 204 as shown in FIGS. 2-4. The spring 150 is adapted to be wound around an exterior surface 112 of the sleeve 110 such that the spring 150 and the exterior surface 112 extend circumferentially all the way around a longitudinal axis 102 of the coolant sleeve assembly 100. In some embodiments, as further discussed below, the spring 150 may be retained on the exterior surface 112 of the sleeve 110 using one or more retention feature(s). In any case, the sleeve 110 and the spring 150 are provided separately from one another such that assembly of the coolant sleeve assembly 100 requires the spring 150 to be installed around the exterior surface 112 of the sleeve 110.

When the coolant sleeve assembly 100 is assembled as depicted in FIG. 1 (see the assembly to the right of the equals sign), the spring 150 illustratively defines at least one coolant channel wall 152 separate from the sleeve 110. The at least one coolant channel wall 152 is shaped to conduct coolant around the sleeve 110 to cool the stator 204 in use of the coolant sleeve assembly 100. The coolant conducted by the at least one coolant channel wall 152 may include, or otherwise be embodied as, oil, lubricating fluid, hydraulic fluid, refrigerant, or another suitable cooling medium.

In the illustrative embodiment, when wound around the sleeve 110, adjacent and/or consecutive portions of the spring 150 (e.g., portions of the spring 150 that are adjacent one another in an axial direction parallel to the longitudinal axis 102) define adjacent and/or consecutive coolant channel walls 152. In at least some embodiments, the adjacent and/or consecutive coolant channel walls 152 cooperate with the sleeve 110 to define coolant channels 154 for conducting coolant around the sleeve 110 as mentioned above. Therefore, in such embodiments, each of the coolant channels 154 may include, or otherwise be embodied as, axial and/or circumferential space defined between adjacent and/or consecutive coolant channel walls 152 and the sleeve 110.

In some configurations, a sleeve, jacket, or similar structure configured for interaction with a stator of an electric motor is machined, cast, or otherwise formed to include at least one coolant channel to conduct coolant over the stator. Significantly, because the at least one coolant channel is formed in the sleeve itself (e.g., on an exterior surface of the sleeve), manufacturing of the sleeve requires precise machining which results in increased manufacturing complexity and cost. In contrast to such configurations, by providing the coolant channel wall 152 and the coolant channels 154 separate from the sleeve 110 as discussed above, the coolant sleeve assembly 100 of the present disclosure substantially avoids those manufacturing challenges. Consequently, casting or machining operations performed on the exterior surface 112 of the sleeve 110 may be drastically simplified compared to sleeves employed in other configurations, and significantly less material removal may be required on the exterior surface 112 of the sleeve 110 compared to sleeves having other configurations.

The illustrative sleeve 110 has a circular cross-sectional shape and includes the exterior surface 112 and an interior surface 114 arranged opposite the exterior surface 112. The interior surface 114 extends circumferentially all the way around the longitudinal axis 102 to define a central passageway 116 of the sleeve 110 that is sized to receive the stator 204. The sleeve 110 extends along the longitudinal axis 102 from an end 118 to an end 120 arranged opposite the end 118.

In the illustrative embodiment, the sleeve 110 includes a flange ring 122 located at the end 118. The flange ring 122 may include, be embodied as, or otherwise provide, a mounting flange for installing the coolant sleeve assembly 100 in the main housing 200 of the electric motor 202, at least in some embodiments. To facilitate that installation, the flange ring 122 may be formed to include a number of mounting features, such as one or more apertures, projections, protrusions, or combinations thereof, which may be specific to a mounting configuration of the coolant sleeve assembly 100 in the main housing 200. Additionally, in some embodiments, the flange ring 122 may provide a structure for mounting one or more elements of the electric motor 202, such as one or more coil windings of the stator 204, for example.

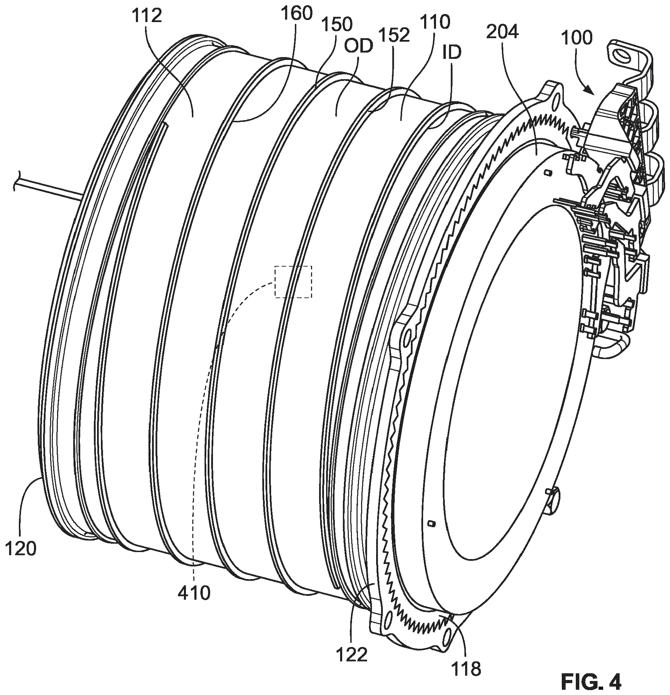

The exterior surface 112 and the interior surface 114 of the sleeve 110 are illustratively cast, machined, or otherwise formed as substantially smooth surfaces as shown in FIG. 1. As a result, manufacturing operations of the sleeve 110 may be simplified compared to other configurations, as mentioned above. In some embodiments, as further discussed below with reference to FIG. 4, the sleeve 110 may include retention feature(s) to retain the spring 150 around the exterior surface 112 in use of the coolant sleeve assembly 100. Additionally, in some embodiments, and aside from any retention feature(s) provided thereon, the exterior surface 112 may be devoid of any channels or projections along the longitudinal axis 102.

In the illustrative embodiment, the spring 150 includes, or is otherwise embodied as, a helical spring 150. As a result, when the spring 150 is installed around the exterior surface 112 of the sleeve 110, the at least one coolant channel wall 152 defined by the spring 150 includes, or is otherwise embodied as, at least one helical coolant channel wall 152. In some embodiments, the at least one helical coolant channel wall 152 extends circumferentially all the way around the longitudinal axis 102 in a repeating fashion to form a continuous helical coolant channel wall having multiple circular loops.

The helical spring 150 illustratively has a rectangular cross-sectional shape. In some embodiments, the rectangular cross-sectional shape of the helical spring 150 may facilitate interaction and/or contact between the spring 150 and the exterior surface 112 of the sleeve 110 around the longitudinal axis 102 to establish the at least one helical coolant channel wall 152. In other embodiments, however, the helical spring 150 may have another suitable cross-sectional shape. For example, in some embodiments, the helical spring 150 may have a trapezoidal cross-sectional shape, a conical cross-sectional shape, or a frustoconical cross-sectional shape, just to name a few.

In the illustrative embodiment, the sleeve 110 and the helical spring 150 each have a metallic construction. Several factors should be considered when selecting the helical spring 150 for use in the coolant sleeve assembly 100. In one aspect, the helical spring 150 should have a stiffness which permits installation of the spring 150 around the sleeve 110 in at least partial contact with the sleeve 110. In other aspect, the helical spring 150 should have a stiffness which resists substantial deformation of the spring 150 in response to exposure to pressurized coolant. It should be appreciated that the helical spring 150 may be selected on the basis of a construction and geometry that imparts the desired stiffness.

When the coolant sleeve assembly 100 is assembled as depicted in FIG. 1, the helical spring 150 contacts the exterior surface 112 of the sleeve 110. In some embodiments, contact between the exterior surface 112 and the helical spring 150 establishes the at least one helical coolant channel wall 152. As such, in those embodiments, the exterior surface 112 and the helical spring 150 may be said to cooperatively define the at least one helical coolant channel wall 152.

In some embodiments, such as those in which the helical spring 150 and the exterior surface 112 of the sleeve 110 cooperatively define the at least one helical coolant channel wall 152, one or more coolant leakage paths 160 may be defined between the exterior surface 112 and the spring 150. More specifically, the one or more coolant leakage paths 160 may be defined between an outer diameter OD of the sleeve 110 (which extends to the exterior surface 112) and an inner diameter ID of the spring 150. At least in some embodiments, the coolant leakage path(s) 160 include, or are otherwise embodied as, flow path(s) separate from the at least one helical coolant channel wall 152 along which coolant may leak in use of the coolant sleeve assembly 100. It should be appreciated that in some cases, it may be desirable and/or advantageous to minimize coolant leakage along the coolant leakage path(s) 160 and thereby increase heat transfer from the stator 204 to the coolant. Seals may be employed to minimize fluid leakage as described in greater detail below.

It should be appreciated that the electric motor 202 incorporating the coolant sleeve assembly 100 may be adapted for use in a variety of applications. In one respect, the electric motor 202 may be adapted for use in one or more vehicular applications. For example, the electric motor 202 may be included in a fire and emergency vehicle, a refuse vehicle, a coach vehicle, a recreational vehicle or motorhome, a municipal and/or service vehicle, an agricultural vehicle, a mining vehicle, a specialty vehicle, an energy vehicle, a defense vehicle, a port service vehicle, a construction vehicle, and a transit and/or bus vehicle, just to name a few.

Additionally, in some embodiments, the electric motor 202 incorporating the coolant sleeve assembly 100 may be incorporated into a vehicle powertrain and/or drivetrain and used to produce rotational power to propel the vehicle. The vehicle powertrain and/or drivetrain including the electric motor 202 may be adapted for use with, or otherwise incorporated into, tractors, front end loaders, scraper systems, cutters and shredders, hay and forage equipment, planting equipment, seeding equipment, sprayers and applicators, tillage equipment, utility vehicles, mowers, dump trucks, backhoes, track loaders, crawler loaders, dozers, excavators, motor graders, skid steers, tractor loaders, wheel loaders, rakes, aerators, skidders, bunchers, forwarders, harvesters, swing machines, knuckleboom loaders, diesel engines, axles, planetary gear drives, pump drives, transmissions, generators, and marine engines, among other suitable equipment.

Referring now to FIG. 2, the stator 204 is positioned in the central passageway 116 of the sleeve 110 and the coolant sleeve assembly 100 is assembled as described above. The coolant sleeve assembly 100 and the stator 204 are at least partially disposed in an interior space 206 defined by the main housing 200. More specifically, the coolant sleeve assembly 100 and the stator 204 are at least partially disposed in the interior space 206 such that the main housing 200, the coolant sleeve assembly 100, and the stator 204 extend circumferentially around a longitudinal axis 212. In some embodiments, the longitudinal axis 212 is parallel to and/or substantially similar to the longitudinal axis 102.

In the illustrative embodiment, the main housing 200 is formed to include an inlet fluid port 220 and an outlet fluid port 230. The inlet fluid port 220 is adapted to receive coolant supplied to the coolant sleeve assembly 100 from a coolant source (not shown). It should be appreciated that, at least in some embodiments, coolant supplied to the inlet fluid port 220 includes, or is otherwise embodied as, coolant that has not been appreciably heated by heat produced during operation of the stator 204 of the electric motor 202. The outlet fluid port 230 is adapted to expel or discharge coolant supplied to the coolant sleeve assembly 100 from the coolant source. It should be appreciated that, at least in some embodiments, coolant expelled from the outlet fluid port 230 includes, or is otherwise embodied as, coolant that has been appreciably heated by heat produced during operation of the stator 204.

The inlet fluid port 220 and the outlet fluid port 230 are illustratively arranged at an outer diameter 222 of the main housing 200. In particular, the fluid ports 220, 230 are arranged at the outer diameter 222 such that the fluid ports 220, 230 are spaced from one another along the longitudinal axis 212. Additionally, the fluid ports 220, 230 are arranged at the outer diameter 222 such that the fluid ports 220, 230 are spaced from one another circumferentially around the longitudinal axis 212.

In the illustrative embodiment, the inlet fluid port 220 is arranged to conduct coolant to the coolant sleeve assembly 100 in a direction indicated by arrow 224 in use of the electric motor 202. In some embodiments, the direction indicated by arrow 224 may be perpendicular to the longitudinal axis 212. In other embodiments, however, the direction indicated by arrow 224 may not be perpendicular to the longitudinal axis 212. In one example, the direction indicated by arrow 224 may be skewed relative to the longitudinal axis 212.

Additionally, in the illustrative embodiment, the outlet fluid port 230 is arranged to conduct coolant away from the coolant sleeve assembly 100 in a direction indicated by arrow 234 in use of the electric motor 202. In some embodiments, the direction indicated by arrow 234 may be perpendicular to the longitudinal axis 212. In other embodiments, however, the direction indicated by arrow 234 may not be perpendicular to the longitudinal axis 212. In one example, the direction indicated by arrow 234 may be skewed relative to the longitudinal axis 212. In any case, the directions indicated by arrows 224, 234 are illustratively opposite one another.

Referring now to FIG. 3, in at least some embodiments, it may be desirable to contain coolant that may flow along the one or more coolant leakage paths 160 in use of the electric motor 202. To that end, in the illustrative embodiment, the electric motor 202 includes annular seals 310, 320. The annular seals 310, 320 are illustratively identical to one another.

Each of the annular seals 310, 320 illustratively includes, or is otherwise embodied as, any structure or collection of structures adapted for positioning between the sleeve 110 (e.g., the exterior surface 112) and the main housing 200 to establish a circumferential seal around the longitudinal axis 212. In some embodiments, each of the seals 310, 320 includes a gasket, an O-ring, a compression ring, a washer, or the like. In the illustrative embodiment, the annular seal 310 is a radial seal or O-ring and the annular seal 320 is an axial seal or gasket. In any case, the seals 310, 320 are arranged between the sleeve 110 and the main housing at the corresponding axial ends 118, 120 of the sleeve 110.

In some embodiments, the circumferential seal around the longitudinal axis 212 between the ends 118, 120 of the sleeve 110 which is cooperatively established at least partially by the annular seals 310, 320 resists the flow of coolant along the leakage path(s) 160 outside of the coolant sleeve assembly 100. In that respect, the seals 310, 320 facilitate containment within the coolant sleeve assembly 100 of coolant conducted through the at least one helical coolant channel 154 in use of the electric motor 202. It should be appreciated that increased containment of coolant within the coolant sleeve assembly 100 promotes increased heat transfer from the stator 204 to the coolant supplied to the assembly 100, at least in some embodiments. Increased heat transfer may be beneficial to lower the operating temperature of the electric motor 202 and resist degradation over the service life thereof.

Referring now to FIG. 4, in some embodiments, when the spring 150 is wound around the exterior surface 112 of the sleeve 110, the spring 150 contacts the exterior surface 112 such that a radial tension of the spring 150 at least partially retains the spring 150 in interaction with the sleeve 110 around the axis 212. Additionally, in some embodiments, when the spring 150 is wound around the exterior surface 112 of the sleeve 110, the spring 150 contacts the exterior surface 112 such that friction between the spring 150 and the sleeve 110 at least partially retains the spring 150 in interaction with the sleeve 110 around the axis 212. In such embodiments, the sleeve 110 may be formed with or without any locking or retention feature(s).

Further, in some embodiments, the sleeve 110 is formed to include one or more retention feature(s) 410 (shown in phantom). The retention feature(s) 410 include, or are otherwise embodied as, any feature or collection of features capable of at least partially retaining the spring 150 in interaction with the exterior surface 112 of the sleeve 110 around the axis 212. In some embodiments, the retention feature(s) 410 may include one or more stops, tabs, flanges, or other suitable positive locking feature(s) sized for interaction with the spring 150 to lock and/or retain the spring 150 in place around the sleeve 110. Additionally, in some embodiments, the retention feature(s) 410 may include one or more slots or apertures formed in the sleeve 110 that are sized to receive the spring 150. In other embodiments, however, as alluded to above, the retention feature(s) 410 may be omitted from the sleeve 110 entirely.

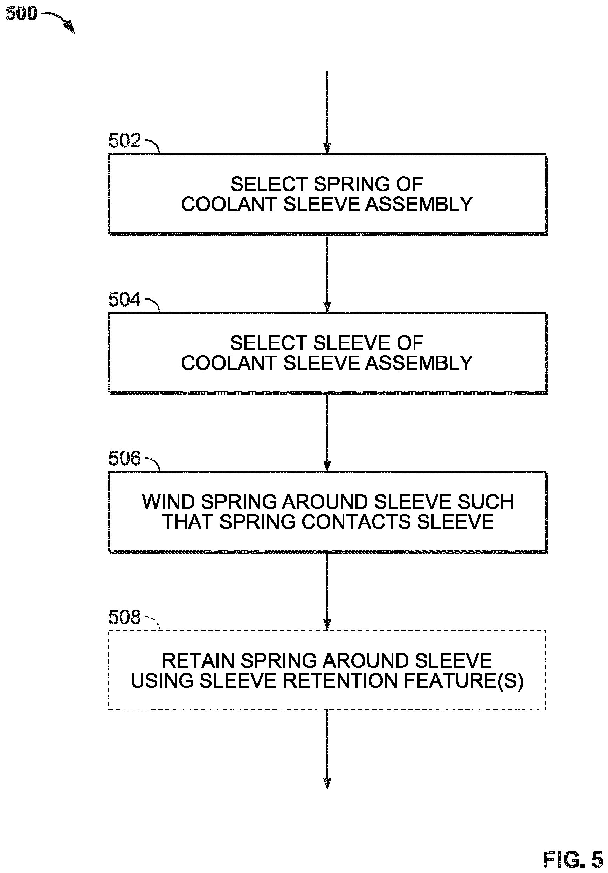

Referring now to FIG. 5, an illustrative method 500 of assembling the coolant sleeve assembly 100 is depicted. It should be appreciated that the method 500 may be performed manually (e.g., by one or more operators), at least in some embodiments. In other embodiments, the method 500 may be performed by an electronic control system capable of receiving input provided by one or more operators. In any case, the method 500 corresponds to, or is otherwise associated with, performance of the blocks described below in the illustrative sequence of FIG. 5. It should be appreciated, however, that the method 500 may be performed in one or more sequences different from the illustrative sequence.

The illustrative method 500 begins with block 502. In block 502, the spring 150 of the coolant sleeve assembly 100 is selected. Among other things, selection of the spring 150 in block 502 may account for the construction and the geometry of the spring 150, as well as the stiffness of the spring 150. As discussed above, the spring 150 may be selected in block 502 based on a stiffness which resists substantial deformation of the spring 150 in response to exposure to pressurized coolant and which permits installation of the spring 150 around the sleeve 110. Additionally, in some embodiments, the spring 150 may be selected in block 502 in compliment with the selection of the sleeve 110, which is discussed below. In any event, from block 502, the method 500 proceeds to block 504.

In block 504 of the illustrative method 500, the sleeve 110 of the coolant sleeve assembly 100 is selected. In some embodiments, the sleeve 110 is selected in block 504 in compliment with the selection of the spring 150 in block 502. Additionally, in some embodiments, selection of the sleeve 110 in block 504 may include, or otherwise be embodied as, forming the sleeve 110. In those embodiments, forming the sleeve 110 may include forming a sleeve body (e.g., a sleeve body defining the substantially smooth surfaces 112, 114) and a flange ring (e.g., the flange ring 122). Regardless, from block 504, the method 500 proceeds to block 506.

In block 506 of the illustrative method 500, the spring 150 is wound around the exterior surface 112 of the sleeve 110 such that the spring 150 contacts the sleeve 110. In some embodiments, the spring 150 is wound around the exterior surface 112 to attain the desired shape and geometry of the at least one helical coolant channel wall 152 around the sleeve 110. It should be appreciated that in some embodiments, the spring 150 is wound around the exterior surface 112 of the sleeve 110 in preparation for installation or integration of the coolant sleeve assembly 100 into the main housing 200 of the electric motor 202. In those embodiments, the spring 150 may be wound around the sleeve 110 to position the spring 150 to receive coolant supplied through the fluid inlet port 220 and conduct coolant toward the fluid outlet port 230 upon installation or integration into the main housing 202. In any case, from block 506, the method 500 proceeds to block 508, at least in some embodiments.

In block 508 of the illustrative method 500, the spring 150 is retained in interaction with the sleeve 110 using the retention feature(s) 410 formed in the sleeve 110. In some embodiments, to retain the spring 150 with the sleeve 110 in block 508, the spring 150 may be mated with, arranged in direct contact with, or otherwise coupled to, the sleeve 110 using the retention feature(s) 410. Of course, in embodiments in which the sleeve 110 is formed without any retention features, block 508 may be omitted from the method 500.

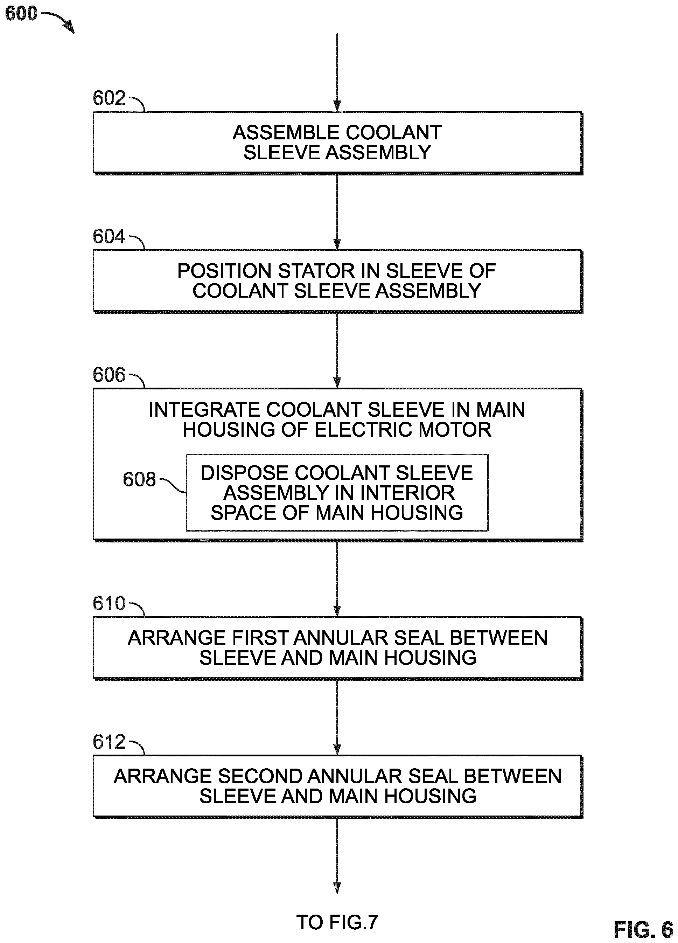

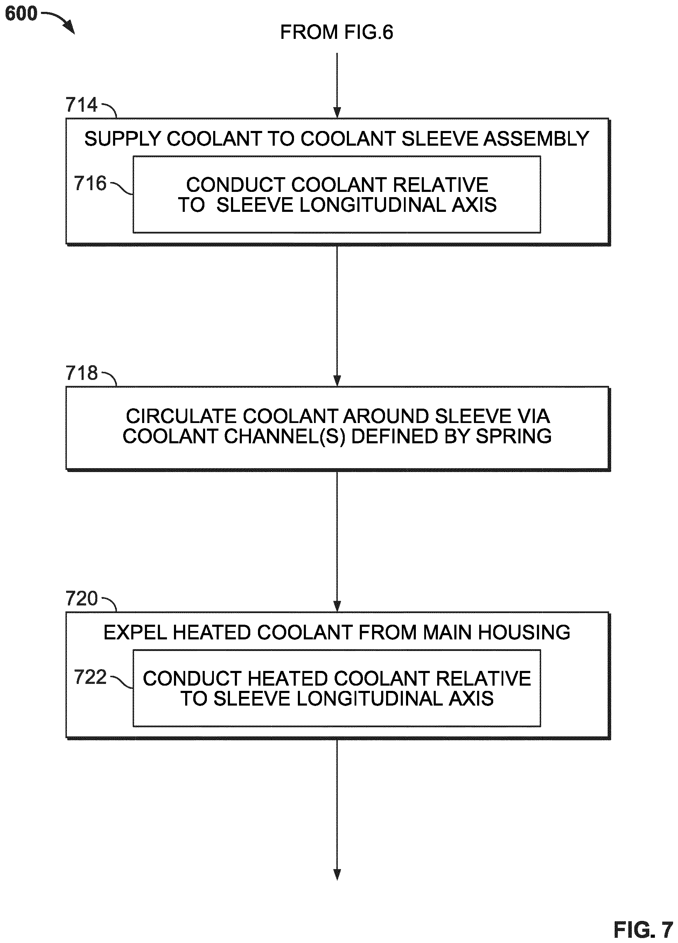

Referring now to FIGS. 6 and 7, an illustrative method 600 of cooling the stator 204 of the electric motor 202 is depicted. It should be appreciated that the method 600 may be performed manually (e.g., by one or more operators), at least in some embodiments. In other embodiments, the method 600 may be performed by an electronic control system capable of receiving input provided by one or more operators. In any case, the method 600 corresponds to, or is otherwise associated with, performance of the blocks described below in the illustrative sequence of FIGS. 6 and 7. It should be appreciated, however, that the method 600 may be performed in one or more sequences different from the illustrative sequence.

The illustrative method 600 begins with block 602. In block 602, the coolant sleeve assembly 100 is assembled. In the illustrative embodiment, to perform block 602, the method 500 is performed. In some embodiments, to perform block 602, the method 500 may be performed in conjunction with, or in addition to, other activities. Regardless, from block 602, the method 600 proceed to block 604.

In block 604 of the illustrative method 600, the stator 204 is positioned in the central passageway 116 of the sleeve 110. In the illustrative embodiment, the stator 204 is positioned in the central passageway 116 such that the sleeve 110 at least partially surrounds the stator 204 along the longitudinal axis 212. From block 604, the method 600 proceeds to block 606.

In block 606 of the illustrative method 600, the coolant sleeve assembly 100 is integrated into the main housing 200 of the electric motor 202. In the illustrative embodiment, to perform block 606, block 608 is performed. In block 608, the coolant sleeve assembly 100 is disposed in the interior space 206 of the main housing 200 such that the main housing 200, the coolant sleeve assembly 100, and the stator 204 extend circumferentially around the longitudinal axis 212. Additionally, in some embodiments, performance of block 606 may include positioning the spring 150 around the sleeve 110 to receive coolant supplied to the fluid inlet port 220 and to conduct coolant toward the fluid outlet port 230. In any case, from block 606, the method 600 proceeds to block 610.

In block 610 of the illustrative method 600, the annular seal 310 is arranged between the exterior surface 112 of the sleeve 110 and the main housing 200. More particularly, in block 610, the annular seal 310 is arranged between the surface 112 and the main housing 200 at the axial end 118 of the sleeve 110. At least in some embodiments, in block 610, the seal 310 is arranged between the surface 112 and the main housing 200 at the axial end 118 of the sleeve 110 such that the seal 310 extends circumferentially all the way around the longitudinal axis 212 at the end 118. Further, in some embodiments, block 610 may be performed prior to, or concurrently with, performance of block 602. In any event, from block 610, the method 600 proceeds to block 612.

In block 612 of the illustrative method 600, the annular seal 320 is arranged between the exterior surface 112 of the sleeve 110 and the main housing 200. More particularly, in block 612, the annular seal 320 is arranged between the surface 112 and the main housing 200 at the axial end 120 of the sleeve 110. At least in some embodiments, in block 612, the seal 320 is arranged between the surface 112 and the main housing 200 at the axial end 120 of the sleeve 110 such that the seal 320 extends circumferentially all the way around the longitudinal axis 212 at the end 120. Further, in some embodiments, block 612 may be performed prior to, or concurrently with, performance of block 602. In any event, from block 612, the method 600 proceeds to block 714.

In block 714 of the illustrative method 600, coolant is supplied to the coolant sleeve assembly 100 via the fluid inlet port 220 formed in the main housing 200. In the illustrative embodiment, to perform block 714, block 716 is performed. In block 716, coolant is conducted (e.g., using the fluid inlet port 220) relative to the longitudinal axis 212 of the coolant sleeve assembly 100. In some embodiments, in block 716, coolant is conducted using the fluid inlet port 220 in the direction 224 relative to the longitudinal axis 212. From block 714, the method 600 proceeds to block 718.

In block 718 of the illustrative method 600, coolant is circulated around the sleeve 110 via the at least one helical coolant channel 154 at least partially defined by the spring 150. In some embodiments, performance of block 718 may include conducting coolant over the sleeve 110 along a helical flow path defined by the at least one helical coolant channel 154. In any event, from block 718, the method 600 proceeds to block 720.

In block 720 of the illustrative method 600, heated coolant (e.g., coolant heated from heat generated by the stator 204) is expelled from the main housing 200 via the fluid outlet port 230 formed in the main housing 200. In the illustrative embodiment, to perform block 720, block 722 is performed. In block 722, coolant is conducted (e.g., using the fluid outlet port 230) relative to the longitudinal axis 212 of the coolant sleeve assembly 100. In some embodiments, in block 720, coolant is conducted using the fluid outlet port 230 in the direction 234 relative to the longitudinal axis 212.

While the disclosure has been illustrated and described in detail in the foregoing drawings and description, the same is to be considered as exemplary and not restrictive in character, it being understood that only illustrative embodiments thereof have been shown and described and that all changes and modifications that come within the spirit of the disclosure are desired to be protected.

## Claims

1. A coolant sleeve assembly to cool a stator of an electric motor, the coolant assembly comprising:
a sleeve sized to receive the stator; and
a spring wound around the sleeve,
wherein the spring at least partially defines at least one coolant channel wall separate from the sleeve to conduct coolant around the sleeve and thereby cool the stator in use of the coolant sleeve assembly.

2. The coolant sleeve assembly of claim 1, wherein the spring is a helical spring that at least partially defines at least one helical coolant channel wall around the sleeve, optionally wherein the helical spring has a rectangular cross-sectional shape.

3. The coolant sleeve assembly of claim 2, wherein:
an exterior surface of the sleeve extends circumferentially around a longitudinal axis;
the exterior surface is devoid of any channels or projections along the longitudinal axis; and
the helical spring contacts the exterior surface of the sleeve.

4. The coolant sleeve assembly of claim 2, wherein one or more coolant leakage paths separate from the at least one helical coolant channel wall are defined between an exterior surface of the sleeve and the spring in use of the coolant sleeve assembly.

5. The coolant sleeve assembly of claim 1 or 2, wherein:
an exterior surface of the sleeve extends circumferentially around a longitudinal axis;
the spring contacts the exterior surface of the sleeve; and
the sleeve is formed to include at least one retention feature to at least partially retain the spring in interaction with the sleeve around the longitudinal axis.

6. The coolant sleeve assembly of claim 1 or 2, wherein:
an exterior surface of the sleeve extends circumferentially around a longitudinal axis; and
the spring contacts the exterior surface of the sleeve such that a radial tension of the spring at least partially retains the spring in interaction with the sleeve around the longitudinal axis.

7. An electric motor comprising:
a stator; and
the coolant sleeve assembly of any preceding claim.

8. The electric motor of claim 7, further comprising a main housing defining an interior space in which the coolant sleeve assembly and the stator are at least partially disposed such that the main housing, the coolant sleeve assembly, and the stator extend circumferentially around a longitudinal axis.

9. The electric motor of claim 8, further comprising a first annular seal arranged between the sleeve and the main housing at one axial end of the sleeve and a second annular seal arranged between the sleeve and the main housing at another axial end of the sleeve opposite the one axial end.

10. The electric motor of claim 8 or 9, wherein the main housing includes a first fluid port arranged at an outer diameter of the main housing and a second fluid port arranged at the outer diameter of the main housing such that the first and second fluid ports are spaced from one another along the longitudinal axis; optionallywherein:
one of the first fluid port and the second fluid port is arranged to conduct coolant to the coolant sleeve assembly in a direction perpendicular to the longitudinal axis in use of the electric motor; and
another of the first fluid port and the second fluid port is arranged to conduct coolant away from the coolant sleeve assembly in a direction perpendicular to the longitudinal axis in use of the electric motor.

11. The electric motor of claim 10, wherein the first and second fluid ports are spaced from one another circumferentially around the longitudinal axis.

12. A method of cooling a stator of an electric motor, the method comprising:
assembling a coolant sleeve assembly;
positioning the stator in a sleeve of the coolant sleeve assembly such the sleeve at least partially surrounds the stator;
integrating the coolant sleeve assembly in a main housing of the electric motor such that the coolant sleeve assembly is arranged in an interior space defined by the main housing;
supplying coolant to the coolant sleeve assembly via a fluid inlet formed in the main housing; and
circulating coolant around the sleeve via at least one helical coolant channel wall at least partially defined by a spring of the coolant sleeve assembly that is separate from the sleeve.

13. The method of claim 12, further comprising expelling heated coolant from the main housing via a fluid outlet forming in the main housing.

14. The method of claim 12 or 13, wherein integrating the coolant sleeve assembly in the main housing comprises disposing the coolant sleeve assembly in the interior space such that the main housing, the coolant sleeve assembly, and the stator extend circumferentially around a longitudinal axis.

15. The method of any of claims 12 to 14, wherein supplying coolant to the coolant sleeve assembly via the fluid inlet comprises conducting coolant in a direction perpendicular to a longitudinal axis of the coolant sleeve assembly.
